(19) Europäisches Patentamt
European Patent Office
Office européen des brevets

(11) EP 3 733 731 A1

(12) EUROPÄISCHE PATENTANMELDUNG

(43) Veröffentlichungstag:
**04.11.2020 Patentblatt 2020/45**

(51) Int Cl.:
***C08G 59/50*** *(2006.01)* ***C08G 59/62*** *(2006.01)*
***C08G 59/68*** *(2006.01)*

(21) Anmeldenummer: **19171884.0**

(22) Anmeldetag: **30.04.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
- **Behrens, Nicole**
  **81245 München (DE)**
- **Bornschlegl, Alexander**
  **81245 München (DE)**

(74) Vertreter: **Hilti Aktiengesellschaft**
**Corporate Intellectual Property**
**Feldkircherstrasse 100**
**Postfach 333**
**9494 Schaan (LI)**

# (54) HÄRTERZUSAMMENSETZUNG FÜR EINE EPOXIDHARZMASSE, EPOXIDHARZMASSE UND MEHRKOMPONENTEN-EPOXIDHARZSYSTEM MIT VERBESSERTER TIEFTEMPERATURHÄRTUNG

(57) Die Erfindung betrifft eine Härterzusammensetzung für eine Mehrkomponenten-Epoxidharzmasse zur chemischen Befestigung von Konstruktionselementen, eine Epoxidharzmasse und ein Mehrkomponenten-Epoxidharzsystem. Die Erfindung betrifft ferner ein Verfahren zur chemischen Befestigung von Konstruktionselementen in Bohrlöchern. Die Erfindung betrifft auch die Verwendung einer Kombination eines Salzes (S) mit einem Phenolderivat zur chemischen Befestigung von Konstruktionselementen, insbesondere bei tiefen Temperaturen (≤ 0 °C), zur Verbesserung der Härtung und der Auszugsfestigkeit.

EP 3 733 731 A1

## Beschreibung

Die Erfindung betrifft eine Härterzusammensetzung für ein Mehrkomponenten-Epoxidharzmasse zur chemischen Befestigung von Konstruktionselementen, eine Epoxidharzmasse und ein Mehrkomponenten-Epoxidharzsystem. Die Erfindung betrifft ferner ein Verfahren zur chemischen Befestigung von Konstruktionselementen in Bohrlöchern. Die Erfindung betrifft auch die Verwendung einer Kombination eines Salzes (S) mit einem Phenolderivat in einer Epoxidharzmasse zur chemischen Befestigung von Konstruktionselementen, insbesondere bei tiefen Temperaturen (≤ 0 °C), zur Verbesserung der Härtung und der Auszugsfestigkeit.

Mehrkomponenten-Mörtelmassen auf der Grundlage von härtbaren Epoxidharzen und Aminhärtern sind seit langem bekannt und werden als Klebstoffe und Spachtelmassen zur Rissverfüllung und chemische Dübel zur Befestigung von Konstruktionselementen wie Ankerstangen, Bewehrungseisen und Schrauben in Bohrlöchern verschiedenen Untergrunds verwendet. Diese Mörtelmassen zeigen jedoch häufig bei tiefen Temperaturen ≤ 0 °C extrem lange Aushärtezeiten bzw. ist es nicht möglich eine ausreichende Aushärtereaktion zu erzielen, so dass entsprechende Massen aufgrund nicht vorhandender bzw. sehr schlechter Belastbarkeit (Versagenslasten) nicht zur chemischen Befestigung von Konstruktionselementen geeignet sind.

Im Stand der Technik sind Mehrkomponenten-Mörtelmassen auf der Grundlage von härtbaren Epoxidharzen und Aminhärtern beschrieben, die eine sehr gute Belastbarkeit bei hohen Temperaturen zeigen. So beschreiben die noch nicht offen gelegten europäischen Anmeldungen mit den Anmeldenummern 18195417.3, 18195422.3 und 18195415.7 Mehrkomponenten-Epoxidharzsysteme, bei denen die Härterkomponente ein Salz (S) ausgewählt aus der Gruppe bestehend aus Salzen der Salpetersäure, Salzen der Salpetrigen Säure, Salzen der Halogene und Salzen der Trifluormethansulfonsäure enthält. Diese Mehrkomponenten-Mörtelmassen zeigen alle eine unzureichende Belastbarkeit, sobald sie bei niedrigen Temperaturen ≤ 0 °C ins Bohrloch appliziert werden und bei entsprechend niedrigen Temperaturen ausgehärtet werden. Dementsprechend ist es nicht möglich diese Mehrkomponenten-Mörtelmassen in bestimmten Ländern im Winter bzw. in Ländern mit geringen Durchschnittstemperaturen zu verwenden.

Aufgabe der Erfindung ist es daher, eine Härterkomponente für Mehrkomponenten-Epoxidharzmassen bereitzustellen, wobei die aus der Mehrkomponenten-Epoxidharzmasse hergestellte Mörtelmasse für Befestigungszwecke geeignet ist und im Vergleich zur herkömmlichen Mörtelmassen eine verbessserte Auszugsfestigkeit bei tiefen Temperaturen (≤ 0 °C) aufweist. Gleichzeitig soll die aus der Mehrkomponenten-Epoxidharzmasse hergestellte Mörtelmasse im Vergleich zu herkömmlichen Mörtelmassen eine ähnliche bzw. wenn möglich sogar leicht verbesserte Auszugsfestigkeit bei Standardtemperaturen (20 bis 25 °C) aufweisen.

Die der Erfindung zu Grunde liegende Aufgabe wird durch eine Härterzusammensetzung (B) gemäß Anspruch 1 gelöst. Bevorzugte Ausführungsformen der erfindungsgemäßen Härterzusammensetzung (B) sind in den Unteransprüchen angegeben, die wahlweise miteinander kombiniert werden können.

Gegenstand der Erfindung ist ferner eine Epoxidharzmasse gemäß Anspruch 9 und ein Mehrkomponenten-Epoxidharzsystem nach Anspruch 11. Bevorzugte Ausführungsformen der erfindungsgemäßen Epoxidharzmasse und des Mehrkomponenten-Epoxidharzsystems sind in den Unteransprüchen angegeben, die wahlweise miteinander kombiniert werden können.

Gegenstand der Erfindung ist ferner ein Verfahren zur chemischen Befestigung von Konstruktionselementen in Bohrlöchern gemäß Anspruch 13.

Die Erfindung umfasst ferner die Verwendung mindestens eines Salzes (S) ausgewählt aus der Gruppe bestehend aus Salzen der Salpetersäure, Salzen der Salpetrigen Säure, Salzen der Halogene und Salzen der Trifluormethansulfonsäure in Kombination mit mindestens einem Phenolderivat zur Verbesserung der Auszugsfestigkeiten von Epoxidharzmassen bei tiefen Temperaturen, vorzugsweise bei ≤ 0 °C, bevorzugt in einem Bereich von 0 °C bis -10 °C, gemäß Anspruch 14.

Erfindungsgemäß wird eine Härterzusammensetzung (B) für eine Epoxidharzmasse bereitgestellt, die mindestens ein gegenüber Epoxidgruppen reaktives Amin sowie als Beschleuniger mindestens ein Salz (S) ausgewählt aus der Gruppe bestehend aus Salzen der Salpetersäure, Salzen der Salpetrigen Säure, Salzen der Halogene, Salzen der Trifluormethansulfonsäure und Kombinationen davon umfasst, wobei die Härterkomponente (B) zusätzlich mindestens ein Phenolderivat als Beschleuniger umfasst.

Die Verwendung der erfindungsgemäßen Härterzusammensetzung (B) in einer Epoxidharzmasse für Befestigungszwecke führt zu einer erheblichen Verbesserung der Aushärtereaktion bei Temperaturen ≤ 0°C und somit auch zu einer erheblichen Verbesserung der Auszugsfestigkeiten bei Temperaturen von ≤ 0 °C. Die gehärteten Massen zeigen eine hervorragende Auszugsfestigkeit bei Temperaturen von ≤ 0 °C, bevorzugt in einem Bereich von ≤ 0 °C bis -10 °C. Im Vergleich zu herkömmlichen Massen können die erfindungsgemäßen Massen nach kürzerer Zeit belastet werden (90 % der Referenzlast). Somit eignen sich die erfindungsgemäße Härterzusammensetzung (B) sowie die daraus hergestellten Epoxidharzmassen insbesondere für die Anwendung in Ländern mit kaltem Temperaturprofil.

Im Sinne der Erfindung haben die hier und in der nachfolgenden Beschreibung verwendeten Begriffe die folgende Bedeutung:

"*aliphatische Verbindungen*" sind acyclische oder cyclische, gesättigte oder ungesättigte Kohlenstoffverbindungen, ausgenommen aromatische Verbindungen;

"*cycloaliphatische Verbindungen*" sind Verbindungen mit einer carbocyclischen Ringstruktur, ausgenommen Benzolderivate oder andere aromatische Systeme;

"*araliphatische Verbindungen*" sind aliphatische Verbindungen mit einem aromatischen Grundgerüst, so dass im Falle einer funktionalisierten araliphatischen Verbindung eine vorhandene funktionelle Gruppe an den aliphatischen und nicht den aromatischen Teil der Verbindung angebunden ist;

"*aromatische Verbindungen*" sind Verbindungen, die der Hückel (4n+2)-Regel folgen;

"*Amine*" sind Verbindungen, die durch Austausch von einem, zwei oder drei Wasserstoffatomen durch Kohlenwasserstoffgruppen aus Ammoniak abgeleitet sind und die allgemeinen Strukturen $RNH_2$ (primäre Amine), $R_2NH$ (sekundäre Amine) und $R_3N$ (tertiäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997));

"*Salze*" sind Verbindungen, die aus positiv geladenen Ionen (Kationen) und negativ geladenen Ionen (Anionen) aufgebaut sind. Zwischen diesen Ionen liegen ionische Bindungen vor. Der Ausdruck "*Salze der Salpetersäure*" beschreibt Verbindungen, die von Salpetersäure ($HNO_3$) abgeleitet werden und als Anion ein Nitrat ($NO_3^-$) umfassen. Der Ausdruck "*Salze der Salpetrige Säure*" beschreibt Verbindungen, die von der Salpetrigen Säure ($HNO_2$) abgeleitet werden und als Anion ein Nitrit ($NO_2^-$) umfassen. Der Ausdruck "*Salze der Halogene*" beschreibt Verbindungen, die als Anion ein Element der 7. Hauptgruppe des Periodensystems umfassen. Insbesondere sind unter dem Ausdruck der "*Salze der Halogene*" solche Verbindungen zu verstehen, die als Anion ein Fluorid ($F^-$), Chlorid ($Cl^-$), ein Bromid (Br) oder lodid ($I^-$) umfassen. Der Ausdruck "*Salze der Trifluormethansulfonsäure*" beschreibt Verbindungen, die von der Trifluormethansulfonsäure ($CF_3SO_3H$) abgeleitet werden und als Anion ein Triflat ($CF_3SO_3^-$) umfassen. Der Begriff Salz (S) im Sinne der vorliegenden Erfindung umfasst auch die entsprechenden Hydrate der Salze. Die Salze (S), welche als Beschleuniger eingesetzt werden, werden auch als Salze im Sinne der vorliegenden Erfindung bezeichnet;

"*Phenolderivate*" ist eine Sammelbezeichnung für alle Verbindungen, die von Phenol (Summenformel $C_6H_5OH$) abgeleitet werden. Bei den Phenolderivaten ist eines oder mehrere der an den aromatischen Ring gebundenen Wasserstoffatome durch ggf. Heteroatome enthaltende Kohlenwasserstoffgruppen substituiert.

"*Novolakharz*" ist die Bezeichnung für Polykondensationsprodukte aus Formaldehyd bzw. Formaldehyd-Vorstufen mit phenolischen Verbindungen, wie z.B. Phenol, Kresol, Bisphenol A oder F und Cardanol-Derivaten .

Die Härterzusammensetzung (B) umfasst erfindungsgemäß mindestens ein gegenüber Epoxidgruppen reaktives Amin. Entsprechende Amine sind dem Fachmann generell bekannt. Vorzugsweise ist das mindestens eine gegenüber Epoxidgruppen reaktive Amin ausgewählt aus der Gruppe bestehend aus aliphatischen, alicyclischen, aromatischen und araliphatischen Aminen, und welches pro Molekül im Mittel mindestens zwei an ein Stickstoffatom gebundene reaktive Wasserstoffatome aufweist.

Beispiele für gegenüber Epoxidgruppen reaktive geeignete Amine sind im Folgenden angegeben, ohne jedoch den Umfang der Erfindung einzuschränken: 1,2-Diaminoethan(ethylendiamin), 1,2-Propandiamin, 1,3-Propandiamin, 1,4-Diaminobutan, 2,2-Dimethyl-1,3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1, 7-diamin, 1,11-Diamino-3,6,9-trioxundecan, 1,8-Diamino-3, 6-dioxaoctan, 1,5-Diamino-methyl-3-azapentan, 1,10-Diamino-4, 7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N,N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, MXDA), 1,4-Benzoldimethanamin (p-Xylylendiamin, PXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 3-Aminomethyl-3,5,5-trimethylcyclohexylamin (Isophorondiamin (IPDA)), Diaminodicyclohexylmethan (PACM), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.0$^{2,6}$]decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin.

Bevorzugte Amine in der erfindungsgemäßen Härterzusammensetzung (B) sind Polyamine, wie 2-Methylpentandiamin (DYTEK A), 3-Aminomethyl-3,5,5-trimethylcyclohexan (IPDA), 1,3-Benzoldimethanamin (m-Xylylendiamin, MXDA), 1,4-Benzoldimethanamin (p-Xylylendiamin, PXDA), 1,6-Diamino-2,2,4-trimethylhexan (TMD), Diethylentriamin (DETA), Triethylentetramin (TETA), Tetraethylenpentamin (TEPA), Pentaethylenhexamin (PEHA), N-Ethylaminopiperazin (N-EAP), (3(4),8(9)Bis(aminomethyl)dicyclo[5. 2.1.0$^{2,6}$]decan (Isomerengemisch, tricyclischer primärer Amine; TCD-Diamin), 1,14-Diamino-4,11-dioxatetradecan, Dipropylentriamin, 2-Methyl-1,5-pentandiamin, N,N'-Dicyclohexyl-1,6-hexandiamin, N,N'-Dimethyl-1,3-diaminopropan, N,N'-Diethyl-1,3-diaminopropan, N,N-Dimethyl-1,3-diaminopropan, sekundäre Polyoxypropylendi- und triamine, 2,5-Diamino-2,5-dimethylhexan, Bis(aminomethyl)tricyclopentadien, 1,8-Diamino-p-menthan, Bis-(4-amino-3,5-dimethylcyclohexyl)methan, 1,3-Bis(aminomethyl)cyclohexan (1,3-BAC), Dipentylamin, N-2-(Aminoethyl)piperazin (N-AEP), N-3-(Aminopropyl)piperazin, Piperazin und Methylcyclohexyl-diamin (MCDA).

Die Amine können sowohl einzeln als auch im Gemisch von zwei oder mehreren der genannten Amine eingesetzt werden.

Das bzw. die gegenüber Epoxidgruppen reaktive(n) Amin(e) ist/sind in der Härterzusammensetzung bevorzugt in einem Anteil von 10 bis 90 Gew.-%, besonders bevorzugt 35 bis 70 Gew.% bezogen auf das Gesamtgewicht der Härterzusammensetzung (B) enthalten.

Als Ersatz für die Amine und/oder als weiterer Zusatz für die Härterzusammensetzung (B) können auch Thiole, Dithiole und/oder Polythiole verwendet werden, die bevorzugt aus der Gruppe bestehend aus aliphatischen, alicyclischen, aromatischen und araliphatischen Thiolen sowie Mischungen daraus ausgewählt sind.

Es ist auch möglich, dass das mindestens eine gegenüber Epoxidgruppen reaktive Amin mindestens eine Mannich-Base umfasst. Diese kann alleine oder in Kombination mit den vorgenannten Aminen eingesetzt werden. Die verwendeten Mannichbasen sind die Reaktionsprodukte eines Amins und eines Aldehyds mit einer phenolischen Verbindung, die aus der aus Phenol, Brenzkatechin, Resorcin, Hydrochinon, Hydroxyhydrochinon, Phloroglucin, Pyrogallol, o-Kresol, m-Kresol, p-Kresol, Bisphenolen wie Bisphenol F oder Bisphenol A, und Kombinationen davon bestehenden Gruppe ausgewählt ist.

Zur Bildung der Mannich-Base wird die phenolische Verbindung mit einem vorzugsweise primären oder sekundären Amin und einem Aldehyd oder einer Aldehydvorstufe umgesetzt, die durch Zersetzung einen Aldehyd ergibt. Der Aldehyd oder die Aldehydvorstufe kann vorteilhaft als wässrige Lösung, insbesondere bei erhöhter Temperatur von etwa 50°C bis 90°C, zu der Reaktionsmischung zugesetzt und mit dem Amin sowie der phenolischen Verbindung umgesetzt werden.

Als phenolische Verbindung werden bevorzugt Phenol oder ein styrolisiertes Phenol, Resorcin, styrolisiertes Resorcin, Bisphenol A oder Bisphenol F, besonders bevorzugt Phenol oder ein styrolisiertes Phenol, styrolisiertes Resorcin oder Bisphenol A zur Bildung der Mannich-Base verwendet.

Der zur Bildung der Mannich-Base verwendete Aldehyd ist bevorzugt ein aliphatischer Aldehyd, besonders bevorzugt Formaldehyd. Als Aldehyd-Vorstufe können bevorzugt Trioxan oder Paraformaldehyd verwendet werden, die durch Erhitzen in Gegenwart von Wasser zu Formaldehyd zerfallen.

Das zur Umsetzung mit dem Aldehyd und der phenolischen Verbindung unter Bildung der Mannich-Base verwendete Amin ist bevorzugt eines der oben genannten Amine und bevorzugt 1,3-Benzoldimethanamin (MXDA), 3-Aminomethyl-3,5,5-trimethylcyclohexan (IPDA), 1,3-Bis(aminomethyl)cyclohexan (1,3-BAC), 1,2- und 1,4-Diaminocyclohexan (1,2-DACH und 1,4-DACH), Diaminodicyclohexylmethan (PACM), Methylcyclohexyl-diamin (MCDA) und 5-(Aminomethyl)bicyclo[[2.2.1]hept-2-yl]methylamin (NBDA). Vorzugsweise liegt das Amin in einem Überschuss vor, so dass die Mannich-Base freie Aminogruppen aufweist.

Das zur Umsetzung mit dem Aldehyd und der phenolischen Verbindung unter Bildung der Mannich-Base verwendete Amin kann auch ein Aminosilan sein, dass ausgewählt ist aus der Gruppe bestehend aus 3-Aminoalkyltrialkoxysilanen, wie 3-Aminopropyl-tri(m)ethoxysilan, 3-Aminoalkylalkyldialkoxysilan, wie 3-Aminopropylmethyldi(m)ethoxysilan, N-(Aminoalkyl)-3-aminoalkyltrialkoxysilanen, wie N-(2-Aminoethyl)-3-aminopropyltri(m)ethoxysilan, N-(Aminoalkyl)-3-aminoalkyl-alkyldialkoxysilanen, wie N-(2-Aminoethyl)-3-aminopropylmethyldi(m)ethoxysilan, 3-[2-(2-Aminoethylamino)ethylamino]propyltri(m)ethoxysilan, Bis-(gamma-Trimethoxysilylpropyl)amin, oder Mischungen davon; oder ferner ausgewählt aus der Gruppe bestehend aus N-Cyclohexyl-3-aminopropyltri(m)ethoxysilan, N-Cyclohexylaminomethylmethyldiethoxysilan, N-Cyclohexylaminomethyltriethoxysilan, 3-Ureidopropyltri(m)ethoxysilan, N-Methyl[3-(Trimethoxysilyl)-propylcarbamat, N-Trimethoxysilylmethyl-O-methylcarbamat und N-Dimethoxy(methyl)silylmethyl-O-methylcarbamat.

In einer bevorzugten Ausführungsform ist die Mannich-Base in einem Anteil von 10 Gew.-% bis 70 Gew.-% in der Härterzusammensetzung (B) vorhanden, bevorzugt von 15 Gew.-% bis 60 Gew.-%, weiter bevorzugt von 20 Gew.-% bis 50 Gew.-% und besonders bevorzugt von 25 Gew.-% bis 40 Gew.-%, bezogen auf das Gesamtgewicht der Härterzusammensetzung (B).

Es ist auch möglich, dass das mindestens eine gegenüber Epoxidgruppen reaktive Amin mindestens ein Benzoxazin-Amin-Addukt umfasst. Dieses kann alleine oder in Kombination mit den vorgenannten Aminen eingesetzt werden. Das Benzoxazin-Amin-Addukt ist ausgewählt aus der Gruppe bestehend aus Substanzen gemäß Formel **Ia**, Substanzen gemäß Formel **Ib** und Mischungen daraus, mit den folgenden Strukturen:

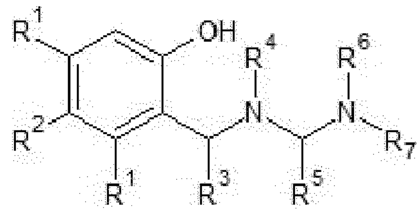

**Ia,**

und

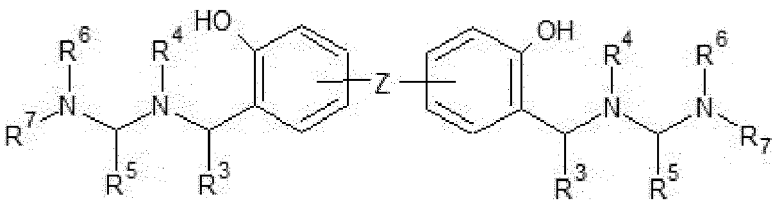

**Ib**

wobei $R^1$, $R^2$, $R^3$, $R^4$ und $R^5$, jeweils unabhängig ausgewählt sind aus H, Alkyl-, Cycloalkyl-, Heterocycloalkyl-, Aryl-, Heteroaryl-, Arylalkyl-, Heteroalkyl-, Alkoxy-, Hydroxyl-, Hydroxyalkyl-, Carboxyl-, Halo-, Haloalkyl-, Amino-, Aminoalkyl-, Alkylcarbonyloxy-, Arylcarbonyloxy-, Alkoxycarbonyl-, Alkylcarbonyl-, Alkylsulfonylamino-, Aminosulfonyl-, Sulfonsäure- oder Alkylsulfonyl-Resten, außerdem aus Kombinationen von zwei oder mehreren dieser Reste, wobei die Reste jeweils unsubstituiert oder wahlweise substituiert sein können;

wobei $R^6$ und $R^7$ jeweils unabhängig H oder einen Amino-, Diamino- oder Polyamino-Rest bedeuten, die aus der Gruppe bestehend aus aliphatischen, alicyclischen, aromatischen Aminresten und außerdem Kombinationen aus zwei oder mehreren dieser Reste ausgewählt sind, wobei die Reste jeweils unsubstituiert oder wahlweise substituiert sein können;

wobei Z ausgewählt ist aus einer direkten Bindung, -C(O)-, -S-, -O-, -S(O)-, $-S(O)_2-$, $-C(R^8)(R^9)-$, $-[C(R^8)(R^9)]_m-C(R^8)(R^9)-[C(R^{10})(R^{11})]_n-$, $-[C(R^8)(R^9)]_m-C(R^8)(aryl)-[C(R^{10})(R^{11})]_n-$, $-[C(R^8)(R^9)]_m-C(O)-[C(R^{10})(R^{11})]_n-$, $-[C(R^8)(R^9)]_m-S-[C(R^{10})(R^{11})]_n-$, $-[C(R^8)(R^9)]_m-O-[C(R^{10})(R^{11})]_n-$, $-[C(R^8)(R^9)]_m-S(O)-[C(R^{10})(R^{11})]_n-$, $-[C(R^8)(R^9)]_m-S(O)_2-[C(R^{10})(R^{11})]_n-$, einem divalenten Heterozyklus und $-[C(R^8)(R^9)]_m$-Arylen-$[C(R^{10})(R^{11})]_n-$, wobei m und n jeweils unabhängig voneinander gleich 0 bis 10 sind, bevorzugt gleich 0 bis 5, und wobei $R^8$, $R^9$, $R^{10}$ und $R^{11}$ jeweils unabhängig die gleiche Bedeutung wie die Reste $R^1$ bis $R^5$ besitzen.

Für die Benzoxazin-Amin-Addukte gemäß den Strukturen Ia und Ib ist es bevorzugt, dass $R^3$ und $R^5$ jeweils H sind.

Weiterhin bevorzugt ist Z ausgewählt ist aus einer direkten Bindung, $-C(R^8)(R^9)-$, - $C(R^8)(aryl)-$, -C(O)-, -S-, -O-, -S(O)-, $-S(O)_2-$, einem divalenten Heterozyklus und - $[C(R^8)(R^9)]_m$-Arylen-$[C(R^{10})(R^{11})]_n-$, wobei m und n jeweils unabhängig voneinander gleich 0 bis 5 sind. Besonders bevorzugt ist Z ausgewählt aus einer direkten Bindung oder $-C(R^8)(R^9)-$, wobei $R^8$ und $R^9$ jeweils unabhängig ausgewählt sind aus H oder $C_1$-$C_4$-Alkylresten, bevorzugt H oder Methyl, oder zusammen einen divalenten Laktonrest bilden.

In einer vorteilhaften Ausführungsform sind $R^3$ und $R^5$ im Benzoxazin-Amin-Addukt gemäß den Strukturen Ia und Ib jeweils H, und Z hat die vorstehend angegebene Bedeutung.

In einer bevorzugten Ausführungsform ist das Benzoxazin-Amin-Addukt in einem Anteil von 10 Gew.-% bis 70 Gew.-% in der Härterzusammensetzung (B) vorhanden, bevorzugt von 15 Gew.-% bis 60 Gew.-%, weiter bevorzugt von 20 Gew.-% bis 50 Gew.-% und besonders bevorzugt von 25 Gew.-% bis 40 Gew.-%, bezogen auf das Gesamtgewicht der Härterzusammensetzung (B).

Das Benzoxazin-Amin-Addukt wird durch die Umsetzung wenigstens einer Benzoxazinkomponente mit wenigstens einer Aminkomponente, bevorzugt einem aromatischen oder araliphatischen Amin, einer Diamin- und/oder Polyaminkomponente, erhalten. Geeignete Benzoxazine für die Herstellung des Benzoxazin-Amin-Addukts haben, ohne

den Umfang der Erfindung einzuschränken, bevorzugt die folgende Struktur:

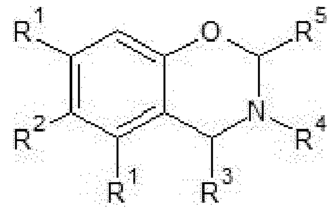

**IIa,**

oder

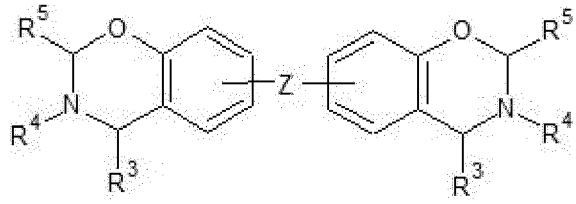

**IIb,**

worin $R^1$ bis $R^5$ und Z die oben angegebenen Bedeutungen besitzen.

In vorteilhaften Ausführungsformen der Benzoxazinkomponente bedeuten $R^3$ und $R^5$ jeweils H, und Z ist ausgewählt ist aus einer direkten Bindung, -C($R^8$)($R^9$)-, -C($R^8$)(aryl)-, -C(O)-, -S-, -O-, -S(O)-, -S(O)$_2$-, einem divalenten Heterozyklus und -[C($R^8$)($R^9$)]$_m$-Arylen-[C($R^{10}$)($R^{11}$)]$_n$-, wobei m und n jeweils unabhängig voneinander gleich 0 bis 5 sind. Besonders bevorzugt ist Z ausgewählt aus einer direkten Bindung oder -C($R^8$)($R^9$)-, wobei $R^8$ und $R^9$ jeweils unabhängig ausgewählt sind aus H oder $C_1$-$C_4$-Alkylresten, bevorzugt H oder Methyl, oder zusammen einen divalenten Laktonrest bilden.

Bevorzugt werden die Benzoxazine ausgewählt aus den folgenden Strukturen:

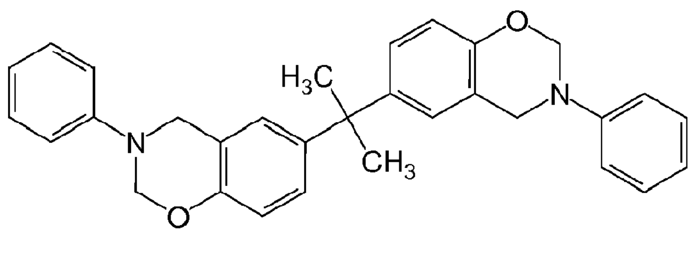

IIc,

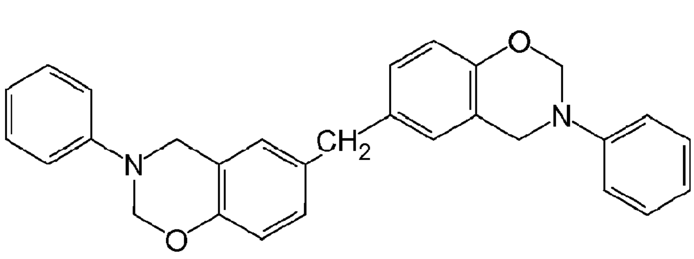

IId,

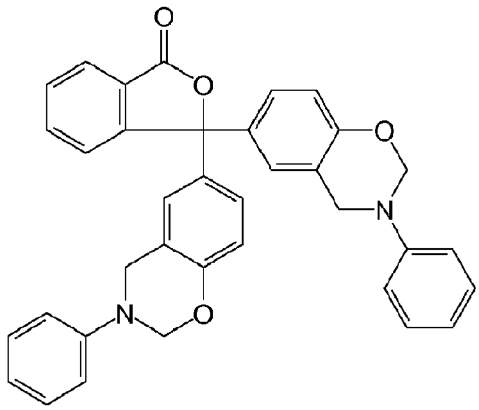

IIe,

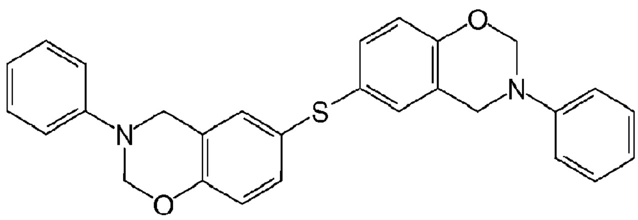

IIf

und

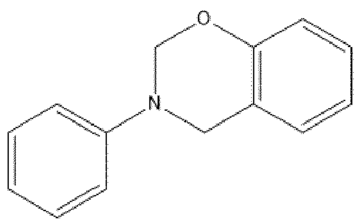

IIg.

Geeignete Amine für die Herstellung des Benzoxazin-Amin-Addukts ohne den Umfang der Erfindung einzuschränken, werden bevorzugt ausgewählt aus der Gruppe der unverzweigten oder verzweigten $C_2$-$C_{10}$-Alkyldiamine, der $C_2$-$C_{10}$-Polyalkylen-Polyamine und der aromatischen und araliphatischen Amine, welche bevorzugt einen substituierten oder unsubstituierten Benzolring enthalten. Das Amin kann entweder alleine oder als Gemisch aus zwei oder mehr der genannten Amine eingesetzt werden. Als vorteilhaft hat sich ein Amingemisch erwiesen, das aus zwei oder mehr Aminen zusammengesetzt ist.

Als Benzoxazin- und Aminkomponente zur Herstellung eines Benzoxazin-Amin-Addukts kommen alle oben genannten Substanzen oder Mischungen daraus in Betracht. Dem Fachmann sind verschiedene Herstellungsverfahren des Benzoxazin-Amin-Addukts bekannt. Zur Herstellung des Benzoxazin-Amin-Addukts wird vorzugsweise eine der oben genannten Benzoxazinkomponenten in einem Lösungsmittel gelöst und bei erhöhter Temperatur mit der Aminkomponente umgesetzt. Vorzugsweise wird das Amin im Überschuss zugegeben. Anstelle des Lösungsmittels kann das Benzoxazin auch in einem Überschuss an Aminkomponente gelöst werden. Die Reaktionsdauer beträgt vorzugsweise 30 h oder weniger, bevorzugt 26 h oder weniger und besonders bevorzugt höchstens etwa 24 h.

Erfindungsgemäß enthält die Härterzusammensetzung (B) als Beschleuniger mindestens ein Salz (S). Das Salz (S) ist erfindungsgemäß mindestens ein Salz ausgewählt aus der Gruppe bestehend aus Salzen der Salpetersäure, Salzen der Salpetrigen Säure, Salzen der Halogene, Salzen der Trifluormethansulfonsäure sowie Kombinationen davon. Vorzugsweise ist das Salz (S) mindestens ein Salz ausgewählt aus der Gruppe bestehend aus Salzen der Salpetersäure, Salzen der Halogene, Salzen der Trifluormethansulfonsäure sowie Kombinationen davon. Es hat sich als besonders bevorzugt herausgestellt, dass das Salz (S) ausgewählt ist aus der Gruppe bestehend aus Nitraten ($NO_3^-$), Iodiden ($I^-$), Triflaten ($CF_3SO_3^-$) sowie Kombinationen davon. Besonders bevorzugt ist umfasst das Salz (S) mindestens ein Nitrat ($NO_3^-$).

Als Salze der Salpetersäure eignen sich insbesondere Alkalimetallnitrate, Erdalkalimetallnitrate, Lanthanoidnitrate, Aluminiumnitrat, Ammoniumnitrat sowie Mischungen davon. Entsprechende Salze der Salpetersäure sind im

Handel käuflich erhältlich. Vorzugsweise werden als Salze der Salpetersäure Alkalimetallnitrate und/oder Erdalkalimetallnitrate verwendet, wie beispielsweise $Ca(NO_3)_2$ oder $NaNO_3$. Es ist auch möglich, dass als Salz (S) eine Lösung eines Salzes in Salpetersäure eingesetzt wird, wie beispielsweise eine Lösung enthaltend $Ca(NO_3)_2/HNO_3$. Zur Herstellung dieser Lösung wird $CaCO_3$ in $HNO_3$ gelöst.

Als Salze der Salpetrigen Säure eignen sich insbesondere Alkalimetallnitrite, Erdalkalimetallnitrite, Lanthanoidnitrite, Aluminiumnitrit, Ammoniumnitrit sowie Mischungen davon. Entsprechende Salze der Salpetrigen Säure sind im Handel käuflich erhältlich. Vorzugsweise werden als Salze der Salpetrigen Säure Alkalimetallnitrite und/oder Erdalkalimetallnitrite verwendet, wie beispielsweise $Ca(NO_2)_2$.

Als Salze der Halogene eignen sich insbesondere Alkalimetallhalogenide, Erdalkalimetallhalogenide, Lanthanoidhalogenide, Aluminiumhalogenide, Ammoniumhalogenide sowie Mischungen davon. Entsprechende Salze der Halogene sind im Handel käuflich erhältlich. Vorzugsweise werden die Halogene ausgewählt aus der Gruppe bestehend aus Chlorid, Bromid, Iodid sowie Mischungen davon, wobei insbesondere Iodide bevorzugt verwendet werden.

Als Salze der Trifluormethansulfonsäure eignen sich insbesondere Alkalimetalltriflate, Erdalkalimetalltriflate, Lanthanoidtriflate, Aluminiumtriflat, Ammoniumtriflat sowie Mischungen davon. Entsprechende Salze der Trifluormethansulfonsäure sind im Handel käuflich erhältlich. Vorzugsweise werden als Salze der Trifluormethansulfonsäure Alkalimetallnitrate und/oder Erdalkalimetallnitrate verwendet, wie beispielsweise $Ca(CF_3SO_3)_2$.

Prinzipiell können die Kationen des Salzes (S) organisch, anorganisch oder eine Mischung daraus sein. Vorzugsweise ist das Kation des Salzes (S) ein anorganisches Kation.

Als organische Kationen kommen beispielsweise mit organischen Resten, wie beispielsweise mit $C_1$-$C_6$-Alkylresten substituierte Ammoniumkationen, wie Tetraethylammoniumkationen, in Betracht.

Als anorganische Kationen des Salzes (S) kommen vorzugsweise Kationen in Betracht, die ausgewählt werden aus der Gruppe bestehend aus Alkalimetallen, Erdalkalimetallen, Lanthanoiden, Aluminium, Ammonium ($NH_4^+$) sowie Mischungen davon, bevorzugter aus der Gruppe bestehend aus Alkalimetallen, Erdalkalimetallen, Aluminium, Ammonium sowie Mischungen davon und noch bevorzugter aus der Gruppe bestehend aus Alkalimetallen, Erdalkalimetallen, Aluminium sowie Mischungen davon. Es ist insbesondere bevorzugt, dass das Kation des Salzes (S) ausgewählt ist aus der Gruppe bestehend aus Natrium, Calcium, Aluminium, Ammonium sowie Mischungen davon.

Somit eignen sich als Salz (S) insbesondere die folgenden Verbindungen bzw. Komponenten: $Ca(NO_3)_2$ (Calciumnitrat, üblicherweise eingesetzt als $Ca(NO_3)_2$ Tetrahydrat), eine Mischung aus $Ca(NO_3)_2/HNO_3$, $KNO_3$ (Kaliumnitrat), $NaNO_3$ (Natriumnitrat), $Mg(NO_3)_2$ (Magnesiumnitrat, üblicherweise eingesetzt als $Mg(NO_3)_2$ Hexahydrat), $Al(NO_3)_3$ (Aluminiumnitrat, üblicherweise eingesetzt als $Al(NO_3)_3$ Nonahydrat), $NH_4NO_3$ (Ammoniumnitrat), $Ca(NO_2)_2$ (Calciumnitrit), NaCl (Natriumchlorid), NaBr (Natriumbromid), NaI (Natriumiodid), $Ca(CF_3SO_3)_2$ (Calciumtriflat), $Mg(CF_3SO_3)_2$ (Magnesiumtriflat), $Li(CF_3SO_3)_2$ (Lithiumtriflat).

Die erfindungsgemäße Härterzusammensetzung (B) kann ein oder mehrere Salze (S) aufweisen. Die Salze können sowohl einzeln als auch im Gemisch von zwei oder mehreren der genannten Salze eingesetzt werden.

Zur Verbesserung der Löslichkeitseigenschaften des Salzes (S) in der Härterzusammensetzung (B) kann es vorgesehen sein, dass das Salz (S) in einem geeignete Lösemittel gelöst wird und entsprechend als Lösung eingesetzt wird. Hierfür eignen sich beispielsweise organische Lösemittel wie Methanol, Ethanol oder Glycerin. Als Lösemittel kann aber auch Wasser verwendet werden, gegebenfalls auch in Mischung mit den vorgenannten organischen Lösemitteln. Zur Herstellung der entsprechenden Salzlösungen wird das Salz (S) in das Lösemittel gegeben und gerührt, vorzugsweise bis zur vollständigen Lösung.

Das Salz (S) ist vorzugsweise in einem Anteil von 0,1 bis 15 Gew.-% bezogen auf das Gesamtgewicht der Härterzusammensetzung (B) in der Härterzusammensetzung (B) enthalten. Vorzugsweise ist das Salz (S) in einem Anteil von 0,2 bis 12 Gew.-%, bevorzugter in einem Anteil 0,8 bis 10 Gew.-%, noch bevorzugter in einem Anteil von 1,0 bis 8,0 Gew.-% bezogen auf das Gesamtgewicht der Härterzusammensetzung (B) in der Härterzusammensetzung (B) enthalten.

Erfindungsgemäß umfasst die Härterzusammensetzung (B) neben dem mindestens einen Salz (S) als Beschleuniger zusätzlich mindestens ein Phenolderivat.

Vorzugsweise ist das Phenolderivate ausgewählt aus der Gruppe bestehend aus Polyphenolen aus der Gruppe der Novolakharze, styrolisierten Phenolen, phenolischen Lipiden sowie Kombinationen davon.

Vorzugsweise werden als Polyphenole aus der Gruppe der Novolakharze Verbindungen der folgenden Formel (III) verwendet:

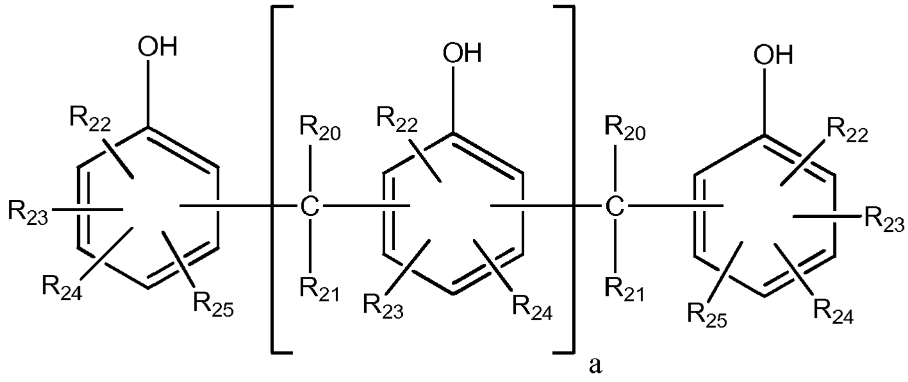

(III),

worin

$R_{20}$ und $R_{21}$ jeweils unabhängig voneinander H oder $-CH_3$ bedeuten;
$R_{22}$, $R_{23}$, $R_{24}$ und $R_{25}$ jeweils unabhängig voneinander H, $-CH_3$ oder einen aliphatischen Rest bedeuten, bevorzugt eine lineare, wahlweise teilweise ungesättigte, unverzweigte Kohlenwasserstoffkette mit bis zu 15 Kohlenstoffatomen, oder einen Alkarylrest bedeuten, bevorzugt $-C_8H_9$; und wobei
a 0 bis 20 ist, bevorzugt 0 bis 15.

Besonders bevorzugt entspricht das Polyphenol aus der Gruppe der Novolakharze der folgenden Formel (IV):

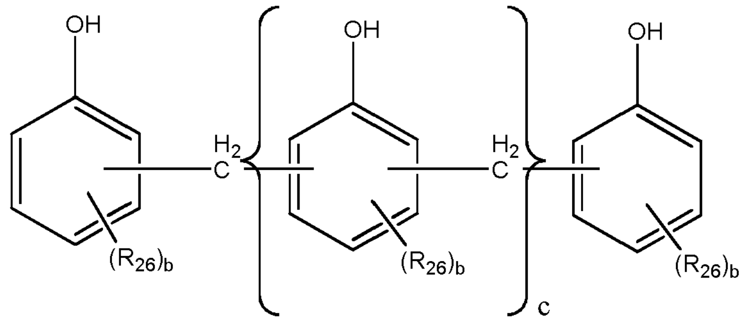

(IV)

worin

$R_{26}$ einen $C_1$-$C_{15}$ -Alkylrest bedeutet, bevorzugt einen Methylrest oder tert.-Butylrest;
b 0, 1 oder 2 ist, und bevorzugt 1 ist; und
c 0 bis 15 ist, und bevorzugt 0 bis 6 ist.

Ganz besonders bevorzugt entspricht das Novolakharz der obigen Formel (IV), worin $R_{26}$ $CH_3$ bedeutet und b 1 oder 2 ist, oder $R_{26}$ tert.-Butyl oder einen $C_1$-$C_{15}$ Alkylrest bedeutet und b 1 ist, und wobei c 0 bis 15 ist, bevorzugt 1 bis 15.

Unter dem Begriff der styrolisierten Phenole sind die elektrophilen Substitutionsprodukte von Phenolen wie Phenol, Brenzcatechin, Resorcin, Hydrochinon, Hydroxyhydrochinon Phloroglucin, Pyrogallol, o-Kresol, m-Kresol oder p-Kresol mit Styrol oder Styrolanalogen, wie Vinyltoluol, Divinylbenzol oder Vinylpyridin, insbesondere Styrol zu verstehen. Besonders bevorzugt wird das styrolisierte Phenol aus den Umsetzungsprodukten von Styrol und Phenol ausgewählt, welche Mischungen von Verbindungen oder einzelne Verbindungen der folgenden Formeln enthalten:

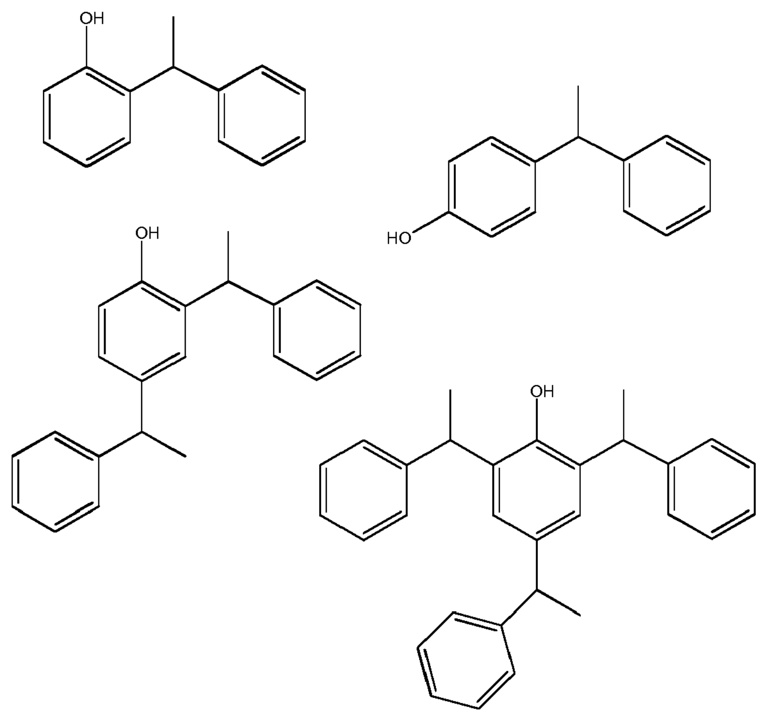

oder 2,6-Distyrylphenol, wie Oligo- und Polystyrolverbindungsanteile oder - verbindungen (Produkte aus kationischer Polymerisation von Styrolen in Phenolen gewonnene oligo- oder polymere Produkte).

Der Begriff "phenolische Lipide" ist ein Sammelbegriff für eine Klasse von Naturprodukten, welche lange aliphatische Ketten und phenolische Ringe umfasst. Vorzugsweise ist das phenolische Lipid ausgewählt aus Alkylkatechinen, Alkylphenolen, Alkylresorcinen und Anacardsäuren. Besonders bevorzugt ist das mindestens eine phenolische Lipid ein Alkylphenol, ausgewählt aus Propylphenol, Butylphenol, Amylphenol, Octylphenol, Nonylphenol, Dodecylphenol und Verbindungen auf Cardanolbasis.

Die erfindungsgemäße Härterzusammensetzung (B) kann ein oder mehrere Phenolderivate aufweisen. Die Phenolderivate können sowohl einzeln als auch im Gemisch von zwei oder mehreren der genannten Phenolderivate eingesetzt werden.

Die erfindungsgemäße Härterzusammensetzung (B) enthält das Phenolderivat vorzugsweise in einem Anteil von 4 bis 25 Gew.-%, bevorzugt in einem Anteil von 10 bis 20 Gew.-%, bezogen auf das Gesamtgewicht der Härterzusammensetzung.

In einer bevorzugten Ausführungsform ist das Phenolderivat mindestens ein Polyphenol ausgewählt aus der Gruppe Novolakharze und wird kombiniert mit einem Salz (S) ausgewählt aus der Gruppe der Nitrate.

Vorzugsweise beträgt das gewichtsprozentuale Verhältnis aller Phenolderivate, insbesondere der Polyphenole aus der Gruppe der Novolakharze, zu allen Salzen (S) in der erfindungsgemäßen Härterzusammensetzung (B) 250:1 bis 1:4, bevorzugt 40:1 bis 1:2.

In einer weiteren vorteilhaften Ausführungsform umfasst die Härterzusammensetzung (B) wenigstens einen weiteren Zusatz ausgewählt aus der Gruppe von weiteren Beschleunigern, Haftvermittlern, Verdickern und Füllstoffen.

Nicht reaktive Verdünnungsmittel (Lösungsmittel) können vorzugsweise in einer Menge bis zu 30 Gew.-% enthalten sein, bezogen auf das Gesamtgewicht der Härterzusammensetzung, beispielsweise von 1 bis 20 Gew.-%. Beispiele für geeignete Lösungsmittel sind Alkohole, wie Methanol, Ethanol oder Glycole, Niederalkylketone wie Aceton, Diniederalkylniederalkanoylamide wie Dimethylacetamid, Niederalkylbenzole wie Xylole oder Toluol, Phthalsäureester oder Paraffine. Vorzugsweise liegt die Menge an Lösungsmitteln bei $\leq$ 5 Gew.-% bezogen auf das Gesamtgewicht der Härterzusammensetzung.

Als weitere Beschleuniger können beispielsweise tertiäre Amine oder Imidazole, Organophosphine, Lewis-Basen oder -Säuren wie Phosphorsäureester, oder Gemische von zwei oder mehr davon zum Einsatz kommen.

Die weiteren Beschleuniger sind in der Härterzusammensetzung (B) in einem Gewichtsanteil von 0,001 bis 20 Gew.-%, bevorzugt 0,001 bis 5 Gew.-%, enthalten, bezogen auf das Gesamtgewicht der Härterzusammensetzung (B). Beispiele für geeignete Beschleuniger sind insbesondere Tris-2,4,6-dimethylaminomethylphenol, 2,4,6-Tris(dimethylamino)phenol und Bis[(dimethylamino)methyl]phenol. Ein geeignetes Beschleunigergemisch enthält 2,4,6-Tris(dimethylaminomethyl)phenol und Bis(dimethylaminomethyl)phenol. Solche Gemische sind kommerziell erhältlich, beispielsweise als Ancamine® K54 (Evonik).

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mindestens eine Si-gebundene hydrolisierbare Gruppe aufweisen, wie beispielsweise 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, 3-Aminopropyltrimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Aminopropyl-trimethoxysilan (AMMO), 3-Aminopropyltriethoxysilan (AMEO), 2-Aminoethyl-3-aminopropyl-trimethoxysilan (DAMO) und Trimethoxysilylpropyldiethylentetramin (TRIAMO) bevorzugt. Weitere Silane sind beispielsweise in der EP3000792 A1 beschrieben, der Inhalt hiermit in die vorliegende Anmeldung mit aufgenommen wird.

Der Haftvermittler kann in einer Menge bis zu 10 Gew.-%, bevorzugt 0,1 Gew.-% bis 8 Gew.-%, weiter bevorzugt 1,0 bis 5 Gew.-% bezogen auf das Gesamtgewicht der Härterzusammensetzung enthalten sein.

Als Verdicker dienen bevorzugt Kieselsäuren. Ein Verdicker kann in einer Menge bis zu 10 Gew.-%, bevorzugt 0,1 Gew.-% bis 8 Gew.-%, bezogen auf das Gesamtgewicht der Härterzusammensetzung (B), enthalten sein.

Als Füllstoffe dienen anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Des Weiteren können auch Verdicker wie pyrogene Kieselsäure als anorganischer Füllstoff verwendet werden. Als Füllstoffe kommen insbesondere nicht oberflächenbehandelte Quarzmehle, Feinquarzmehle und Feinstquarzmehle, wie beispielsweise Millisil W3, Millisil W6, Millisil W8 und Millisil W12, bevorzugt Millisil W12, in Frage. Ferner können silanisierte Quarzmehle, Feinquarzmehle und Feinstquarzmehl eingesetzt werden. Diese sind beispielsweise käuflich unter der Produktserie Silbond der Firma Quarzwerke erhältlich. Hierbei sind die Produktserien Silbond EST (Epoxysilanmodifiziert) und Silbond AST (aminosilanbehandelt) besonders bevorzugt. Ferner können Aluminiumoxid basierte Füllstoffe wie beispielsweise Aluminiumoxidfeinstfüller vom Typ ASFP der Firma Denka, Japan, ($d_{50}$ = 0,3 μm) oder Qualitäten wie DAW oder DAM mit den Typenbezeichnungen 45 ($d_{50}$ < 44 μm), 07 ($d_{50}$ < 9,4μm), 05 ($d_{50}$ < 5,5 μm), 03 ($d_{50}$ < 4,1μm). Weiterhin können die oberflächenbehandelte Fein- und Feinstfüllstoffe vom Typ Aktisil AM (aminosilanbehandelt, $d_{50}$ = 2,2 μm) und Aktisil EM (epoxysilanbehandelt, d50=2,2 μm) von Hoffman Mineral verwendet werden.

Die anorganischen Füllstoffe können in Form von Sanden, Mehlen oder Formkörpern, vorzugsweise in Form von Fasern oder Kugeln, zugesetzt werden. Die Füllstoffe können in einer oder in allen Komponenten des später beschriebenen Mehrkomponenten-Epoxidharzsystems vorhanden sein. Durch eine geeignete Auswahl der Füllstoffe hinsichtlich Art und Korngrößenverteilung/(Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden.

In einer vorteilhaften Ausführungsform weist die Härterzusammensetzung (B) einen AHEW (Amine Hydrogen Equivalent Weight) von 20 bis 1000 g/EQ auf, bevorzugt von 30 bis 500 g/EQ, bevorzugter von 40 bis 350 g/EQ, noch bevorzugter von 50 bis 225 g/EQ und besonders bevorzugt von 50 bis 150 g/EQ. Der AHEW-Wert wird aus dem Molekulargewicht (Mw) des Amins geteilt durch die Anzahl reaktiver Wasserstoffatome pro Molekül ermittelt (H-Äq. = Mw/Funktionalität).

Experimentell kann der AHEW-Wert durch Bestimmung der Glasübergangstemperatur (Tg) einer Mischung aus Epoxidharz (mit bekanntem EEW) und Aminkomponente erhalten werden. Es werden dabei die Glasübergangstemperaturen von Epoxidharz/Amin-Mischungen mit unterschiedlichen Verhältnissen bestimmt. Die Probe wird mit einer Heizrate von -20 K/min von 21 auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (20 K/min). Die Mischung mit der höchsten Glasübergangstemperatur im zweiten Heizlauf ("Tg2") besitzt das optimale Verhältnis von Epoxidharz und Amin. Aus dem bekannten EEW und dem optimalen Epoxidharz/Amin-Verhältnis lässt sich der AHEW-Wert berechnen.

Beispiel: EEW = 158 g/mol

Mischung Amin/Epoxidharz mit maximaler Tg2: 1 g Amin mit 4,65 g Epoxidharz

$$\text{AHEW (Amin)} = \frac{158}{4{,}65} = 34$$

Gegenstand der vorliegenden Erfindung ist ferner eine Epoxidharzmasse, die mindestens ein härtbares Epoxidharz und eine Härterzusammensetzung (B) wie zuvor beschrieben umfasst. Bevorzugt handelt es sich bei der Epoxidharzmasse um eine Mehrkomponenten-Epoxidharzmasse, bevorzugt um eine Zweikomponenten-Epoxidharzmasse.

Als härtbares Epoxid kommt eine Vielzahl der hierfür dem Fachmann bekannten und kommerziell erhältlichen

Verbindungen in Betracht, die im Mittel mehr als eine EpoxidGruppe, vorzugsweise zwei Epoxid-Gruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Beispiele für die zur Herstellung der Epoxidharze eingesetzten mehrwertigen Phenole sind Resorcin, Hydrochinon, 2,2-Bis-(4-Hydroxyphenyl)propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem Epoxyäquivalentgewicht (EEW) von 150 bis 300 g/EQ verwendet.

Weitere Beispiele sind Hexandioldiglycidylether, Trimethylolpropan-triglycidylether, Bisphenol-A-Epichlorhydrinharze und/oder Bisphenol-F-Epichlorhydrinharze, beispielsweise mit einem durchschnittlichen Molekulargewicht von $M_n \leq 2000$ g/mol.

Ein weiterer Gegenstand der vorliegenden Erfindung ist ein Mehrkomponenten-Epoxidharzsystem umfassend eine Epoxidharzkomponente (A) und eine Härterkomponente, wobei die Epoxidharzkomponente (A) ein härtbares Epoxidharz enthält, und die Härterkomponente ein gegenüber Epoxidgruppen reaktives Amin umfasst. Das Mehrkomponenten-Epoxidharzsystem umfasst ferner als Beschleuniger die Kombination mindestens eines Salzes (S) ausgewählt aus Salzen der Salpetersäure, Salzen der Salpetrigen Säure, Salzen der Halogene, Salzen der Trifluormethansulfonsäure und Kombinationen davon sowie mindestens eines Phenolderivates.

In Bezug auf das erfindungsgemäße Mehrkomponenten-Epoxidharzsystem gelten die für das gegenüber Epoxidgruppen reaktive Amin, das Salz (S) und das Phenolderivat vorstehend gemachten Ausführungen.

Das als Beschleuniger eingesetzte Salz (S) kann in der Epoxidharzkomponente (A) oder in der Härterkomponente oder sowohl in der Epoxidharzkomponente (A) als auch in der Härterkomponente enthalten sein. Selbiges gilt für das Phenolderivat. Es ist bevorzugt, dass zumindest das Salz (S) oder das Phenolderivat in der Härterkomponente enthalten ist. Es ist weiterhin bevorzugt, dass sowohl das Salz (S) als auch das Phenolderivat in der Härterkomponente enthalten sind. In diesem Fall kommt im Mehrkomponenten-Epoxidharzsystem die zuvor beschriebene Härterzusammensetzung (B) zum Einsatz.

Der Anteil an Epoxidharz in der Epoxidharzkomponente (A) beträgt >0 Gew.-% bis 100 Gew.-%, bevorzugt 10 Gew.-% bis 70 Gew.-% und besonders bevorzugt 30 Gew.-% bis 60 Gew.-%, bezogen auf das Gesamtgewicht der Epxodharzkomponente (A).

Neben den Epoxidharzen kann die Epoxidharzkomponente (A) wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether, Pentaerythrittetraglycidylether, Trimethylolpropan-triglycidylether (TMPTGE) oder Trimethylolethantriglycidylether (TMETGE), wobei Trimethylolethantriglycidylether bevorzugt ist. Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE) oder 1,4-Butandioldiglycidylether (BDDGE) und Trimethylolethantriglycidylether (TMETGE).

Die Reaktivverdünner liegen bevorzugt in einer Menge von 0 Gew.-% bis 60 Gew.-% vor, bevorzugter von 1 Gew.-% bis 20 Gew.-%, bezogen auf das Gesamtgewicht der Epoxidharzkomponente (A).

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

In einer weiteren Ausführungsform kann die Epoxidharzkomponente (A) einen Co-Beschleuniger enthalten, soweit dieser mit den Epoxidharzen verträglich ist. Als Co-Beschleuniger können beispielsweise tertiäre Amine oder Imidazole, Organophosphine, Lewis-Basen oder -Säuren wie Phosphorsäureester, oder Gemische von zwei oder mehr davon verwendet werden. Diese Co-Beschleuniger können auch, wie vorgenannt, in der Härterzusammensetzung (B) vorliegen.

Der Anteil der Epoxidharzkomponente (A) an der Gesamtmasse des Mehrkomponenten-Epoxidharzsystems beträgt vorzugsweise 5 Gew.-% bis 90 Gew.-%, bevorzugt 20 Gew.-% bis 80 Gew.-%, bevorzugter 30 Gew.-% bis 70 Gew.-% oder noch bevorzugter 40 Gew.-% bis 60 Gew.-%.

Die Epoxidharze können ein EEW von 120 bis 2000 g/Eq aufweisen, vorzugsweise von 140 bis 400 g/Eq, insbesondere 150 bis 300 g/Eq aufweisen. Es können auch Mischungen mehrerer Epoxidharze verwendet werden.

Der Anteil der Härterkomponente an der Gesamtmasse des Mehrkomponenten-Epoxidharzsystems beträgt vorzugsweise 10 Gew.-% bis 95 Gew.-%, bevorzugt 15 Gew.-% bis 80 Gew.-%, bevorzugter 15 Gew.-% bis 60 Gew.-% oder besonders bevorzugt 20 Gew.-% bis 40 Gew.-%.

Des Weiteren kann die Epoxidharzkomponente (A) übliche Zusätze enthalten, insbesondere Haftvermittler und Füllstoffe, wie bereits für die Härterzusammensetzung (B) beschrieben.

Der Haftvermittler kann in einer Menge bis zu 10 Gew.-%, bevorzugt 0,1 bis 5 Gew.-%, besonders bevorzugt 1,0 bis 5,0 Gew.-%, bezogen auf das Gesamtgewicht der Epoxidharzkomponente (A), enthalten sein.

Als Füllstoffe dienen bevorzugt die oben beschriebenen anorganischen Füllstoffe. Die Füllstoffe können in einer oder in allen Komponenten des Mehrkomponenten-Epoxidharzsystems vorhanden sein. Der Anteil an Füllstoffen beträgt vorzugsweise 0 Gew.-% bis 90 Gew.-%, beispielsweise 10 Gew.-% bis 90 Gew.-%, bevorzugt 15 Gew.-% bis 75 Gew.-%, weiter bevorzugt 20 Gew.-% bis 50 Gew.-%, und weiter bevorzugt 25 Gew.-% bis 40 Gew.-%, bezogen auf das Gesamtgewicht des Mehrkomponenten-Epoxidharzsystems.

Weitere denkbare Zusätze zum Mehrkomponenten-Epoxidharzsystem sind ferner Thixotropiermittel wie gegebenenfalls organisch nachbehandelte pyrogene Kieselsäure, Bentonite, Alkyl- und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

Auch nicht reaktive Verdünnungsmittel (Lösungsmittel) können vorzugsweise in einer Menge bis zu 30 Gew.-% enthalten sein, bezogen auf das Gesamtgewicht der jeweiligen Komponente (Epoxidharz- und/oder Härterkomponente), beispielsweise von 1 Gew.-% bis 20 Gew.-%. Beispiele für geeignete Lösungsmittel sind Alkohole, wie Methanol oder Ethanol, Niederalkylketone wie Aceton, Diniederalkyl-niederalkanoylamide wie Dimethylacetamid, Niederalkylbenzole wie Xylole oder Toluol, Phthalsäureester oder Paraffine.

Derartige weitere Zusätze können vorzugsweise in Gewichtsanteilen von insgesamt 0 Gew.-% bis 40 % zugesetzt sein, bezogen auf das Gesamtgewicht der Epoxidharzkomponente.

Das Mehrkomponenten-Epoxidharzsystem liegt vorzugsweise in Patronen, Kartuschen oder Folienbeuteln vor, die dadurch gekennzeichnet sind, dass sie zwei oder mehrere voneinander getrennte Kammern umfassen, in welchen die Epoxidharzkomponente (A) und die Härterkomponente der Mörtelmasse reaktionsinhibierend voneinander getrennt angeordnet sind.

Zur bestimmungsgemäßen Anwendung des Mehrkomponenten-Epoxidharzsystems werden die Epoxidharzkomponente (A) und die Härterkomponente aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente wird danach mittels einer bekannten Injektionsvorrichtung in das zuvor gereinigte Bohrloch eingebracht. Anschließend wird das zu fixierende Bauteil in die Epoxidharzmasse eingesetzt und justiert. Die reaktiven Bestandteile der Härterkomponente reagieren mit den Epoxidharzen der Epoxidharzkomponente (A) unter Polyaddition, so dass die Epoxidharzmasse unter Umgebungsbedingungen innerhalb einer gewünschten Zeit, vorzugsweise innerhalb weniger Stunden, aushärtet.

Die Komponenten des Mehrkomponenten-Epoxidharzsystems werden bevorzugt in einem Verhältnis gemischt, das entsprechend der EEW- und AHEW-Werte eine ausgeglichene Stöchiometrie ergibt.

Die erfindungsgemäße Epoxidharzmasse bzw. das erfindungsgemäße Mehrkomponenten-Epoxidharzsystem wird bevorzugt für Bauzwecke eingesetzt. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dienen die erfindungsgemäßen Epoxidharzmassen und das erfindungsgemäße Mehrkomponenten-Epoxidharzsystem zur chemischen Befestigung von Verankerungsmitteln.

Ein weiterer Gegenstand der vorliegenden Erfindung ist ein Verfahren zur chemischen Befestigung von Konstruktionselementen in Bohrlöchern, wobei zur chemischen Befestigung der Konstruktionselemente eine erfindungsgemäße Epoxidharzmasse oder ein erfindungsgemäßes Mehrkomponenten-Epoxidharzsystem wie zuvor beschrieben verwendet wird. Das erfindungsgemäße Verfahren eignet sich insbesondere zum Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dient das erfindungsgemäße Verfahren zur chemischen Befestigung von Verankerungsmitteln.

Ein weiterer Gegenstand der vorliegenden Erfindung ist die Verwendung mindestens eines Salzes (S) ausgewählt aus der Gruppe bestehend aus Salzen der Salpetersäure, Salzen der Salpetrigen Säure, Salzen der Halogene, Salzen der Trifluormethansulfonsäure sowie Kombinationen davon und mindestens eines Phenolderivats als Beschleuniger in einer Epoxidharzmasse zur chemischen Befestigung von Konstruktionselementen, insbesondere zur Verankerung von Befestigungselementen in Bohrlöchern, vorzugsweise zur Verbesserung der Aushärtereaktion und der Auszugsfestigkeiten bei Temperaturen ≤ 0°C, bevorzugt bevorzugt in einem Bereich von ≤ 0 °C bis -10 °C. Es ist bevorzugt, dass die Epoxidharzmasse in Form eines Mehrkomponenten-Epoxidharzsystems vorliegt, welche die zuvor beschriebenen Epoxidharzkomponente (A) und eine Härterkomponente umfasst. Es ist weiterhin bevozugt, dass das Salz (S) sowie das Phenolderivat in der Härterkomponente enthalten sind und somit als Härterkomponente eine Härterzusammensetzung (B) wie zuvor beschrieben verwendet wird.

Die Verwendung einer Kombination mindestens eines Salzes (S) im Sinne der vorliegenden Erfindung und Phenolderivats als Beschleuniger in einer Epoxidharzmasse, insbesondere in einem Mehrkomponenten-Epoxidharzsystem, ermöglicht es, die Aushärtezeit der Epoxidharzmasse bei Temperaturen ≤ 0°C zu verkürzen und entsprechend die Auszugsfestigkeiten bei Temperaturen ≤ 0°C, inbesondere in einem Bereich von ≤ 0 °C bis -10 °C, erheblich zu verbessern.

Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.

## AUSFÜHRUNGSBEISPIELE

### Epoxidharzkomponente (A)

Ausgangsmaterialien

Als Epoxidharze wurden in den Beispielen die im Handel unter den Bezeichnungen Araldite GY 240 und Araldite GY 282 (Huntsman) erhältlichen Bisphenol A-basierten beziehungsweise Bisphenol F-basierten Epoxidharze verwendet.

Als Haftvermittler wurde 3-Glycidyloxypropyl-trimethoxysilan erhältlich unter der Bezeichnung Dynalsylan GLYMO™ (Evonik Industries) verwendet.

Als Reaktivverdünner wurden die im Handel unter den Bezeichnungen Araldite DY-026 und AralditeTM DY-T (Huntsman) erhältlichen 1,4-Butandiol-diglycidylether und Trimethyolpropan-triglycidylether verwendet.

Die flüssigen Komponenten wurden per Hand vorgemischt. Anschließend wurden als Füllstoff Quarz (Millisil™ W12 oder Millisil W4™ der Firma Quarzwerke Frechen) und als Verdicker pyrogene Kieselsäure (Cab-O-Sil™ TS- 720 der Firma Cabot Rheinfelden oder Aerosil R 805 der Firma Evonik) zugegeben und die Mischung im Dissolver (PC Laborsystem, Volumen 1L) 10 min lang bei einem Unterdruck von 80 mbar bei 3500 U/min gerührt.

Die Zusammensetzung der in den Beispielen verwendeten Epoxidharzkomponenten A1 bis A9 ist in der nachfolgenden Tabelle 1 angegeben.

**Tabelle 1:** Zusammensetzungen der Epoxidharzkomponenten A1 bis A9 in Gew.-%

| | A1 | A2 | A3 | A4 | A5 | A6 | A7 | A8 | A9 |
|---|---|---|---|---|---|---|---|---|---|
| 3-Glycidyloxypropyltrimethoxsysilan | 3,4 | 3,4 | 3,4 | 3,4 | 3,4 | 3,4 | 3,4 | 3,4 | 3,4 |
| Bisphenol A-basiertes Epoxidharz | 34,6 | 34,2 | 31,0 | 27,9 | 31,1 | 33,1 | 32,7 | 29,4 | 29,3 |
| Bisphenol F-basiertes Epoxidharz | 18,6 | 18,4 | 16,7 | 15,0 | 16,8 | 17,8 | 17,6 | 15,8 | 15,8 |
| 1,4-Butanedioldiglycidylether | 6,7 | 6,6 | 6,0 | 5,4 | 6,0 | 6,4 | 6,3 | 5,7 | 5,6 |
| Trimethylolpropan-triglycidylether | 6,7 | 6,6 | 6,0 | 5,4 | 6,0 | 6,4 | 6,3 | 5,7 | 5,6 |

(fortgesetzt)

| | A1 | A2 | A3 | A4 | A5 | A6 | A7 | A8 | A9 |
|---|---|---|---|---|---|---|---|---|---|
| Quarz (W12)<br>Quarz (W4) | 27,4 | 28,7 | 34,2 | 41,1 | 33,9 | 30,2 | <br>31,3 | <br>38,0 | <br>38,1 |
| Kieselsäure (Aerosil)<br>Kieselsäure (Cab-O-Sil) | <br>2,7 | <br>2,2 | 2,7 | <br>1,8 | 2,8 | 2,8 | <br>2,4 | <br>2,1 | <br>2,1 |
| | | | | | | | | | |
| **EEW [g/Eq]** | **230** | **232** | **255** | **282** | **254** | **240** | **242** | **269** | **269** |

Die Zusammensetzung der in den Vergleichsbeispielen verwendeten Epoxidharzkomponenten VA1 bis VA9 ist in der nachfolgenden Tabelle 2 angegeben.

**Tabelle 2:** Zusammensetzungen der Epoxidharzkomponenten VA1 bis VA9 in Gew.-%

| | VA1 | VA2 | VA3 | VA4 | VA5 | VA6 | VA7 | VA8 | VA9 |
|---|---|---|---|---|---|---|---|---|---|
| 3-Glycidyloxypropyltrimethoxsysilan | 3,4 | 3,4 | 3,4 | 3,4 | 3,4 | 3,4 | 3,4 | 3,4 | 3,4 |
| Bisphenol A-basiertes Epoxidharz | 34,0 | 39,0 | 39,1 | 25,9 | 31,1 | 32,2 | 32,0 | 29,1 | 29,0 |
| Bisphenol F-basiertes Epoxidharz | 18,3 | 21,0 | 15,7 | 13,9 | 16,7 | 17,3 | 17,2 | 15,7 | 15,6 |
| 1,4-Butanedioldiglycidylether | 6,5 | 7,5 | 5,6 | 5,0 | 6,0 | 6,2 | 6,2 | 5,6 | 5,6 |
| Trimethylolpropan-triglycidylether | 6,5 | 7,5 | 5,6 | 5,0 | 6,0 | 6,2 | 6,2 | 5,6 | 5,6 |
| Quarz (W12)<br>Quarz (W4) | 29,0 | 18,8 | 38,3 | 44,8 | 33,9 | 32,0 | <br>32,7 | <br>38,0 | <br>38,8 |
| Kieselsäure (Aerosil)<br>Kieselsäure (Cab-O-Sil) | <br>2,2 | <br>2,8 | 2,3 | <br>2,0 | 2,7 | 2,7 | <br>2,4 | <br>2,1 | <br>2,1 |
| | | | | | | | | | |
| **EEW [g/Eq]** | **233** | **204** | **271** | **303** | **254** | **246** | **248** | **271** | **272** |

**Härterzusammensetzung (B)**

Ausgangsmaterialien

Als Amine wurden m-Xylylendiamin (MXDA) und 1,3-Cyclohexandimethanamin (1,3-BAC) der Firma MGC, Japan, 2-Methyl-1,5-pentamethylendiamin (Dytek A) der Firma Invista, Niederlande, 3-Aminomethyl-3,5,5-trimethylcyclohexan (Isophorondiamin,IPDA, Handelsname Vastamin IPD) der Firma Evonik Degussa, Deutschland, Methylcyclohexandiamin (Baxxodur EC 210, MCDA) der Firma BASF SE, Deutschland, N-(2-Aminoethyl)piperazin (N-AEP) der Firma TCI Europe und 4,4'-Methylen-biscyclohexylamin (PACM) der Firma Evonik zur Herstellung der Härterzusammensetzung (B) verwendet.

Als Füllstoff wurde Quarz (Millisil™ W12 oder Millisil™ W4 der Firma Quarzwerke Frechen) sowie Calciumaluminatzement (Secar 80 der Firma Kerneos SA) und als Verdicker pyrogene Kieselsäure (Cab-O-Sil™ TS-720 der Firma Cabot Rheinfelden oder Aerosil R 805 der Firma Evonik) verwendet.

Salze (S) und Phenolderivate

Zur Herstellung der in der Härterzusammensetzung (B) verwendeten Salze (S), Novolakharze und weitere Beschleuniger wurden die in der nachfolgenden Tabelle 3 angegebenen Bestandteile verwendet.

**Tabelle 3:** Liste der verwendeten Salze (S), Novolakharze und weitere Beschleuniger

| Salz (S) bzw. Beschleuniger | Handelsname | Hersteller |
|---|---|---|
| Calciumnitrat | Calciumnitrat-Tetrahydrat | Sigma-Aldrich |

(fortgesetzt)

| Salz (S) bzw. Beschleuniger | Handelsname | Hersteller |
|---|---|---|
| Calciumcarbonat | Calciumcarbonat | Sigma-Aldrich |
| Salpetersäure 70%ig | Salpetersäure | Sigma-Aldrich |
| Calciumtriflat | Calciumtrifluoromethansulfonat | Sigma-Aldrich |
| | Phenolite TD-2131 | DIC Europe |
| CNSL-basierter Novolak (cashew nut shell liquid, CNSL) | Cardolite NC-370 | Cardolite Speciality Chemicals |
| Cardanol | Cardolite NX-2026 | Cardolite Speciality Chemicals |
| Kresol-Novolak | Phenolite KA 1160 | DIC Europe |
| Phenol-modifiziertes Inden-Cumaron Harz | Novares CA 80 | Rütgers Novares GmbH |
| Styrolisiertes Phenol | Novares LS 500 | Rütgers Novares GmbH |
| Salicylsäure | Salicysäure | Merck |
| 2,4,6-Tris(dimethylaminomethyl)phenol, Bis[(dimethylamino)methyl]phenol | Ancamin K54 | Evonik |

Das Salz Calciumnitrat wurden als Lösung in Glycerin (1,2,3-Propantriol, CAS-Nr. 56-81-5, Merck, D) eingesetzt. Zur Herstellung der Calciumnitrat-Lösung wurden 400,0 g Calciumnitrat-Tetrahydrat zu 100,0 g Glycerin gegeben und bei 50 °C bis zur vollständigen Lösung (3 Stunden) gerührt. Die so hergestellte Lösung enthielt 80,0 % Calciumnitrat-Tetrahydrat.

Weiterhin wurde eine Calciumnitrat/Salpetersäure-Lösung als Beschleuniger eingesetzt. Zur Herstellung dieser Lösung wurden 52,6 g Calciumcarbonat langsam zu 135,2 g Salpetersäure gegeben und anschließend 5 min gerührt.

## Beispiele 1 bis 9

Zur Herstellung der Härterzusammensetzung (B) der nachfolgenden Beispiele B1 bis B9 wurden die flüssigen Komponenten gemischt. Soweit es sich beim eingesetzten Phenolderivat als Beschleuniger um einen Feststoff handelte, wurde dieser zur Lösung gegeben und bei leicht erhöhter Temperatur (bis zu 50°C) unter Rühren gelöst. Flüssige Phenolderivate und das Salz (S) wurden hinzugegeben und anschließend wurden Quarzmehl und Kieselsäure zugegeben und im Dissolver (PC Laborsystem, Volumen 1L) bei einem Unterdruck von 80 mbar bei 2500 U/min für 10 min gerührt.

Die Zusammensetzung der so hergestellten Härterzusammensetzungen (B) ist in den nachfolgenden Tabelle 4 angegeben:

**Tabelle 4:** Zusammensetzung der Härterzusammensetzung (B) in Gew.-%

| | Beispiel | B1 | B2 | B3 | B4 | B5 | B6 | B7 | B8 | B9 |
|---|---|---|---|---|---|---|---|---|---|---|
| Amin | mXDA | 8,0 | 12,0 | - | 32,2 | 32,2 | - | - | - | - |
| | DYTEK A | 32,2 | 28,2 | 32,2 | - | - | 32,2 | - | - | - |
| | IPDA | - | - | 8,0 | 8,0 | - | - | - | - | - |
| | MCDA | - | - | - | - | 8,0 | - | - | - | - |
| | 1,3-BAC | - | - | - | - | - | 8,0 | 42,0 | 42,0 | 31,5 |
| | N-AEP | - | - | - | - | - | - | 8,0 | 8,0 | 5,6 |
| | PACM | - | - | - | - | - | - | - | - | 13,0 |
| Phenolderivat | Phenolite TD-2131 | 10,2 | 11,5 | - | - | - | - | 10,2 | - | 10,0 |

(fortgesetzt)

| | Beispiel | B1 | B2 | B3 | B4 | B5 | B6 | B7 | B8 | B9 |
|---|---|---|---|---|---|---|---|---|---|---|
| | CNSL-basierter Novolak | - | - | 10,1 | - | - | - | - | - | - |
| | Cardolite NX-2026 | - | - | - | 10,1 | - | - | - | - | - |
| | Kresol-basierter Novolak | - | - | - | - | 10,0 | - | - | - | - |
| | Phenol-modifiziertes Inden-Cumaron-Harz | - | - | - | - | - | 10,2 | - | - | - |
| | Styrolisiertes Phenol | - | - | - | - | - | - | - | 20,0 | - |
| Salz (S) | Calciumnitrat | 3,8 | 2,5 | 6,3 | 6,3 | - | 3,8 | 3,8 | 3,8 | 3,8 |
| | Calciumnitrat/ Salpeters äure | - | - | - | - | 4,0 | - | - | - | - |
| Weitere Beschleuniger | Ancamin K54 | 2,4 | 2,4 | - | - | 2,4 | 2,4 | 2,4 | - | - |
| | Quarz (Millisil W4) | 39,0 | 41,2 | 34,0 | 40,5 | 40,5 | 39,3 | 31,3 | 22,9 | 34,2 |
| | Verdicker (Cab-o-Sil) | 4,4 | 2,2 | | 2,9 | | | 2,3 | 3,3 | 1,9 |
| | Verdicker (Aerosil) | | | 3,4 | | 2,9 | 4,1 | | | |
| | **AHEW [g/Eq]** | **74** | **75** | **77** | **88** | **77** | **75** | **73** | **73** | **79** |

Vergleichsbeispiele 1 bis 9

Zur Herstellung der Härterzusammensetzung (B) der nachfolgenden Vergleichsbeispiele VB1 bis VB5 wurden die flüssigen Komponenten gemischt. Soweit es sich beim eingesetzten Phenolderivat als Beschleuniger um einen Feststoff handelte, wurde dieser zur Lösung gegeben und bei leicht erhöhter Temperatur (bis zu 50°C) unter Rühren gelöst. Flüssige Phenolderivate und das Salz (S) wurden hinzugegeben und anschließend wurden Quarzmehl und Kieselsäure zugegeben und im Dissolver (PC Laborsystem, Volumen **1L**) bei einem Unterdruck von 80 mbar bei 2500 U/min für 10 min gerührt.

In Tabelle 5 ist die Zusammensetzung der Härterkomponenten (B) der Vergleichsbeispiele VB1 bis VB9 gezeigt.

**Tabelle 5:** Zusammensetzung der Härterzusammensetzung (B) in Gew.-%

| | Vergleichsbeispiel | VB1 | VB2 | VB3 | VB4 | VB5 | VB6 | VB7 | VB8 | VB9 |
|---|---|---|---|---|---|---|---|---|---|---|
| Amin | mXDA | 8,0 | 8,0 | - | 32,2 | 32,2 | - | - | - | - |
| | DYTEK A | 32,2 | 32,2 | 32,2 | - | - | 32,2 | - | - | - |
| | IPDA | - | - | 8,0 | 8,0 | - | - | - | - | - |
| | MCDA | - | - | - | - | 8,0 | - | - | - | - |
| | 1,3-BAC | - | - | - | - | - | 8,0 | 42,0 | 42,0 | 31,5 |
| | N-AEP | - | - | - | - | - | - | 8,0 | 8,0 | 5,6 |
| | PACM | - | - | - | - | - | - | - | - | 13,0 |
| Phenolderivat | Phenolite TD-2131 | 14,0 | - | - | - | - | - | 14,0 | - | 10,0 |
| | CNSL-basierter Novolak | - | - | 14,0 | - | - | - | - | - | - |
| | Cardolite NX-2026 | - | - | - | 16,4 | - | - | - | - | - |
| | Kresol-basierter Novolak | - | - | - | - | 14,0 | - | - | - | - |
| | Phenol-modifiziertes Inden-Cumaron-Harz | - | - | - | - | - | 14,0 | - | - | - |

(fortgesetzt)

| | Vergleichsbeispiel | VB1 | VB2 | VB3 | VB4 | VB5 | VB6 | VB7 | VB8 | VB9 |
|---|---|---|---|---|---|---|---|---|---|---|
| Salz (S) | Calciumnitrat | - | 6,3 | - | - | - | - | 3,8 | - | - |
| Weitere Beschleuniger | Ancamin K54 | 2,4 | 2,4 | 2,4 | - | 2,4 | 2,4 | 2,4 | - | - |
| | Salicylsäure | - | - | - | - | - | - | - | 4,0 | 4,0 |
| | Styrolisiertes Phenol | - | - | - | - | - | - | - | 19,8 | - |
| | Quarz (Millisil W4) | 41,3 | 48,5 | 38,9 | 40,5 | 40,3 | 39,4 | 31,3 | 23,2 | 33,6 |
| | Verdicker (Cab-o-Sil) | 2,1 | 2,6 | | 2,9 | | | 2,3 | 3,0 | 2,3 |
| | Verdicker (Aerosil) | | | 4,5 | | 3,1 | 4,0 | | | |
| | **AHEW [g/Eq]** | **74** | **74** | **77** | **88** | **77** | **75** | **73** | **73** | **79** |

**Mörtelmassen und Auszugsversuche**

Die Epoxidharzkomponente A1 bis A9 bzw. VA1 bis VA9 wurden jeweils mit der Härterzusammensetzung B1 bis B9 bzw. VB1 bis VB9 (A1 mit B1, A2 mit B2, VA1 mit VB1 usw.) in Hartkartuschen mit einem Volumenverhältnis 3:1 abgefüllt und über einen statischen Mischer (Quadro™-Mischer der Firma Sulzer) ins Bohrloch injiziert. Die Injektion wird üblicherweise bei Raumtemperatur durchgeführt. Für die Tests zur Auhärtung bei -5 °C wird die Mötelmasse auf +5 °C temperiert und ins Bohrloch injiziert.

Die Auszugsfestigkeit der durch Mischen der Epoxidharzkomponente (A bzw. VA) und Härterzusammensetzung (B bzw. VB) gemäß den oben angegebenen Beispielen erhaltenen Mörtelmassen wurden unter Verwendung einer hochfesten Ankergewindestange M12 gemäß ETAG 001 Part 5 bestimmt, die in ein hammergebohrtes Bohrloch mit einem Durchmesser von 14 mm und einer Bohrlochtiefe von 69 mm mit der jeweiligen Mörtelmasse in C20/25 Beton eingedübelt wurde. Die Bohrlöcher wurden mit Druckluft (2 x 6 bar), einer Drahtbürste (2 x) und anschließend wieder Druckluft (2 x 6 bar) gereinigt.

Die Bohrlöcher wurden vom Bohrgrund her mit der jeweils zu prüfenden Mörtelmasse zu zwei Dritteln befüllt. Die Gewindestange wurde von Hand eingedrückt. Der Mörtelüberschuss wurde mittels eines Spachtels entfernt. Nach der für den jeweiligen Versuch angegebenen Aushärtezeit und Temperatur wurde die Versagenslast durch zentrisches Ausziehen der Ankergewindestange mit enger Abstützung ermittelt. Es wurden folgende Versuche durchgeführt:

**A1**
Trockener Beton, Einbindetiefe 68 mm, Aushärtung 24 Stunden bei 25 °C, Abstützung confined;

**A23, -5 °C, 168 Stunden**
Trockener Beton, Einbindetiefe 68 mm, Aushärtung 168 Stunden bei -5 °C (Untergrundtemperatur), Mörtelmassentemperatur beim Setzen der Ankerstange + 5°C.

Die mit den Mörtelmassen unter Verwendung der Epoxidharzkomponenten A1 bis A9 bzw. VA1 bis VA9 und der Härterkomponenten B1 bis B9 bzw. VB1 bis VB9 gemäß den Beispielen 1 bis 9 und den Vergleichsbeispielen 1 bis 9 erhaltenen Lastwerte sind den folgenden Tabellen 5 und 6 zu entnehmen.

**Tabelle 6:** Bestimmung der Lastwerte der erfindungsgemäßen Beispiele durch Auszugsversuche

| | Beispiele | | | | | | | | |
|---|---|---|---|---|---|---|---|---|---|
| | 1 | 2 | 3 | 4 | 5 | 6 | 7 | 8 | 9 |
| Auszugsversuche | Lastwert [N/mm$^2$] | | | | | | | | |
| **A1** | 38,1 | 34,6 | 34,5 | 32,9 | 33,4 | 29,9 | 35,4 | 37,4 | 35,7 |
| **A23, -5°C, 168 Std.** | 40,4 | 28,1 | 32,5 | 34,8 | 31,5 | 33,4 | 19,6 | 22,5 | 21,0 |

**Tabelle 7:** Bestimmung der Lastwerte der Vergleichsbeispiele durch Auszugsversuche

| | Vergleichs beispiele | | | | | | | | |
|---|---|---|---|---|---|---|---|---|---|
| | 1 | 2 | 3 | 4 | 5 | 6 | 7 | 8 | 9 |
| Auszugsversuche | Lastwert [N/mm$^2$] | | | | | | | | |
| **A1** | 34,1 | 33,1 | 32,8 | 28,2 | 33,9 | 31,0 | 37,2 | 35,8 | 37,7 |
| **A23, -5°C, 168 Std.** | 25,1 | 30,3 | 31,8 | 33,3 | 28,3 | 29,0 | 18,2 | 19,7 | 18,9 |

Die Auszugsversuche zeigen, dass die Mörtelmassen der erfindungsgemäßen Beispiele bei Härtung und Auszug bei -5°C jeweils signifikant höhere Lastwerte aufweisen als die Mörtelmassen der Vergleichsbeispiele.

**Bestimmung der Gelzeit durch Temperaturmessung**

Zur Bestimmung der Gelzeit durch Temperaturmessung wurden 100 g einer Mischung der Epoxidharzkomponente (A) mit der Härterkomponente (B) im Volumenverhältnis 3:1 in einen 150 ml Kunststoffbehälter gefüllt. Es wurde ein Temperaturfühler mittig im Kunststoffbehälter platziert. Die Temperaturänderung wurde aufgezeichnet (Gerät: Yokogawa, DAQ-Station, Model: DX1006-3-4-2). Die Aushärtung des Mörtels konnte durch diese Methode über den Zeitverlauf der Temperaturentwicklung verfolgt werden. Fand eine Beschleunigung bei der Aushärtung statt, ist das Temperaturmaximum zu kürzeren Zeiten hin verschoben, verbunden mit einer höheren Temperatur. Es wurden $T_{max}$ (erreichtes Temperaturmaximum) und $t_{Tmax}$ (Zeit, nach der das Temperaturmaximum erreicht wurde) gemessen. Die Gelzeit korreliert mit der Zeit, die dem Anwender für eine Verarbeitung des gemischten Mörtels vor der Aushärtung bleibt. Eine lange Gelzeit bei gleichzeitig schneller Aushärtung ist für den Anwender von Vorteil.

Es wurden die Gelzeiten für die erfindungsgemäßen Beispiele 1 und die Vergleichsbeispiele 1 und 2 bestimmt. Diese drei Beispiele unterscheiden sich allein durch die Beschleunigerkombination. Das erfindungsgemäße Beispiel 1 wies eine Gelzeit von 6:38 Minuten auf, das Vergleichsbeispiel 1 eine erheblich längere Gelzeit von 17:51 Minuten und Vergleichsbeispiel 2 eine Gelzeit von 5:10 Minuten. Die Aushärtung von Vergleichsbeispiel 1 ist allerdings auch nach 168 Stunden bei -5°C noch nicht abgeschlossen. Vergleichsbeispiel 2 und Beispiel 1 zeigen akzeptable Lastwerte nach 168 Stunden bei -5°C, Beispiel 1 besitzt dabei aber die für den Anwender vorteilhafteste Kombination von möglichst langer Verarbeitungszeit und hoher Endlast nach 168 Stunden. Durch die erfindungsgemäße Kombination von phenolischem Beschleuniger und anorganischem Salz wird daher das insgesamt beste Eigenschaftsprofil erreicht.

## Patentansprüche

1. Härterzusammensetzung (B) für eine Mehrkomponenten-Epoxidharzmasse umfassend mindestens ein gegenüber Epoxidgruppen reaktives Amin sowie als Beschleuniger mindestens ein Salz (S) ausgewählt aus der Gruppe bestehend aus Salzen der Salpetersäure, Salzen der Salpetrigen Säure, Salzen der Halogene, Salzen der Trifluormethansulfonsäure und Kombinationen davon, **dadurch gekennzeichnet, dass** die Härterzusammensetzung (B) ferner als Beschleuniger mindestens ein Phenolderivat umfasst.

2. Härterzusammensetzung (B) nach Anspruch 1, **dadurch gekennzeichnet, dass** das Phenolderivat ausgewählt ist aus der Gruppe bestehend aus Polyphenolen aus der Gruppe der Novolakharze, styrolisierten Phenolen, phenolischen Lipiden sowie Kombinationen davon.

3. Härterzusammensetzung (B) nach Anspruch 1 oder 2, **dadurch gekennzeichnet, dass** das Salz (S) ausgewählt ist aus der Gruppe bestehend aus Nitrat ($NO_3^-$), Iodid ($I^-$), Triflat ($CF_3SO_3$) sowie Mischungen daraus.

4. Härterzusammensetzung (B) nach einem der vorhergehenden Ansprüche, **dadurch gekennzeichnet, dass** das Phenolderivat mindestens ein Polyphenol aus der Gruppe der Novolakharze umfasst, welches der folgenden Formel entspricht:

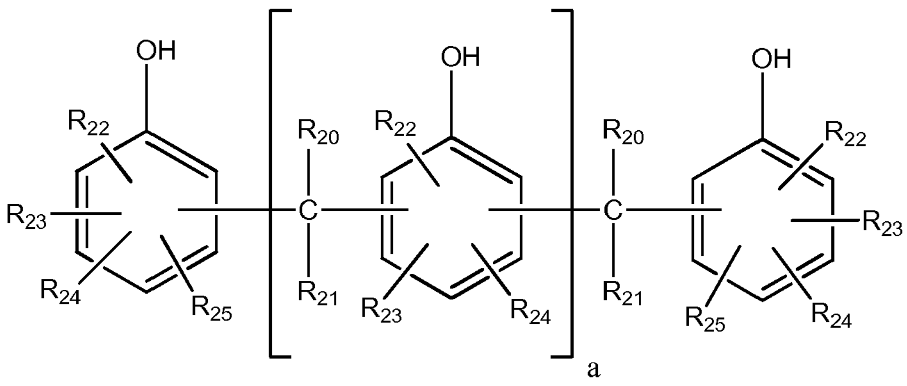

(III),

worin

$R_{20}$ und $R_{21}$ jeweils unabhängig voneinander H oder $-CH_3$ bedeuten;
$R_{22}$, $R_{23}$, $R_{24}$ und $R_{25}$ jeweils unabhängig voneinander H, $-CH_3$ oder einen aliphatischen Rest bedeuten, bevorzugt eine lineare, wahlweise teilweise ungesättigte, unverzweigte Kohlenwasserstoffkette mit bis zu 15 Kohlenstoffatomen, oder einen Alkarylrest bedeuten, bevorzugt $-C_8H_9$;
und wobei
a 0 bis 20 ist.

5. Härterzusammensetzung (B) nach Anspruch 4, **dadurch gekennzeichnet, dass** das Novolakharz der folgenden Formel entspricht:

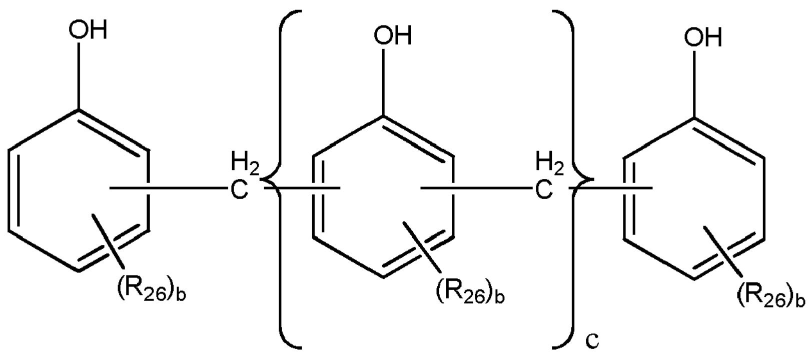

(IV)

worin

$R_{26}$ einen $C_1$-$C_{15}$ -Alkylrest bedeutet,
b 0, 1 oder 2 ist und
c 0 bis 15 ist.

6. Härterzusammensetzung (B) nach einem der vorgehenden Ansprüche, **dadurch gekennzeichnet, dass** das Phenolderivat mindestens ein Polyphenol aus der Gruppe der Novolokharze umfasst und das Salz (S) aus der Gruppe der Nitrate ausgewählt ist.

7. Härterzusammensetzung (B) nach einem der vorhergehenden Ansprüche, **dadurch gekennzeichnet, dass** das gegenüber Epoxidgruppen reaktive Amin ausgewählt ist aus 2-Methylpentandiamin (DYTEK A), 3-Aminomethyl-3,5,5-trimethylcyclohexan (IPDA), 1,3-Benzoldimethanamin (m-Xylylendiamin, MXDA), 1,4-Benzoldimethanamin (p-Xylylendiamin, PXDA), 1,6-Diamino-2,2,4-trimethylhexan (TMD), Diethylentriamin (DETA), Triethylentetramin

(TETA), Tetraethylenpentamin (TEPA), Pentaethylenhexamin (PEHA), N-Ethylaminopiperazin (N-EAP), (3(4),8(9)Bis(aminomethyl)dicyclo[5. 2.1.$0^{2,6}$]decan, 1,14-Diamino-4,11-dioxatetradecan, Dipropylentriamin, 2-Methyl-1, 5-pentandiamin, N,N'-Dicyclohexyl-1, 6-hexandiamin, N,N'-Dimethyl-1,3-diaminopropan, N,N'-Diethyl-1, 3-diaminopropan, N,N-Dimethyl-1,3-diaminopropan, sekundäre Polyoxypropylendi- und triamine, 2,5-Diamino-2, 5-dimethylhexan, Bis(amino-methyl)tricyclopentadien, 1,8-Diamino-p-menthan, Bis-(4-amino-3, 5-dimethylcyclohexyl)methan, 1,3-Bis(aminomethyl)cyclohexan (1,3-BAC), Dipentylamin, N-2-(Aminoethyl)piperazin (N-AEP), N-3-(Aminopropyl)piperazin, Piperazin, Methylcyclohexyl-diamin (MCDA) sowie Kombinationen davon.

**8.** Härterzusammensetzung (B) nach einem der vorhergehenden Ansprüche, **dadurch gekennzeichnet, dass** das Salz (S) ein Kation aus der Gruppe bestehend aus Alkalimetallen, Erdalkalimetallen, Lanthanoiden, Aluminium, Ammonium und Kombinationen davon umfasst.

**9.** Epoxidharzmasse enthaltend mindestens ein härtbares Epoxidharz und eine Härterzusammensetzung (B) nach einem der vorhergehenden Ansprüche.

**10.** Epoxidharzmasse nach Anspruch 9, **dadurch gekennzeichnet, dass** die Epoxidharzmasse eine Mehrkomponenten-Epoxidharzmasse ist.

**11.** Mehrkomponenten-Epoxidharzsystem umfassend eine Epoxidharzkomponente (A) und eine Härterkomponente, wobei die Epoxidharzkomponente (A) ein härtbares Epoxidharz enthält und die Härterkomponente mindestens ein gegenüber Epoxidgruppen reaktives Amin enthält, **dadurch gekennzeichnet, dass** in der Epoxidharzkomponente (A) und/oder in der Härterkomponente mindestens ein Salz (S) ausgewählt aus der Gruppe bestehend aus Salzen der Salpetersäure, Salzen der Salpetrigen Säure, Salzen der Halogene und Salzen der Trifluormethansulfonsäure, sowie mindestens ein Phenolderivat als Beschleuniger enthalten ist.

**12.** Mehrkomponenten-Epoxidharzsystem nach Anspruch 11, **dadurch gekennzeichnet, dass** das Salz (S) und das Phenolderivat in der Härterkomponente enthalten sind.

**13.** Verfahren zur chemischen Befestigung von Konstruktionselementen in Bohrlöchern, wobei zur chemischen Befestigung eine Epoxidharzmasse nach Anspruch 9 oder 10 oder ein Mehrkomponenten-Epoxidharzsystem nach Anspruch 11 oder 12 verwendet wird.

**14.** Verwendung mindestens eines Salzes (S) ausgewählt aus der Gruppe bestehend aus Salzen der Salpetersäure, Salzen der Salpetrigen Säure, Salzen der Halogene und Salzen der Trifluormethansulfonsäure in Kombination mit mindestens einem Phenolderivat als Beschleuniger in einer Epoxidharzmasse zur Verbesserung der Auszugsfestigkeiten bei tiefen Temperaturen

Europäisches Patentamt
European Patent Office
Office européen des brevets

# EUROPÄISCHER RECHERCHENBERICHT

Nummer der Anmeldung
EP 19 17 1884

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 3 392 287 A1 (HILTI AG [LI]) 24. Oktober 2018 (2018-10-24) * Beispiele 1-10 * ----- | 1-14 | INV. C08G59/50 C08G59/62 C08G59/68 |
| X | EP 0 471 988 A2 (SHOMER JOHN A PH D [IL]) 26. Februar 1992 (1992-02-26) | 9-11 | |
| A | * Beispiele 2, 4, 5 * ----- | 1-8, 12-14 | |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| Den Haag | 12. August 2019 | Scheunemann, Sven |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 19 17 1884

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-08-2019

| Im Recherchenbericht angeführtes Patentdokument | Datum der Veröffentlichung | Mitglied(er) der Patentfamilie | Datum der Veröffentlichung |
|---|---|---|---|
| EP 3392287 A1 | 24-10-2018 | KEINE | |
| EP 0471988 A2 | 26-02-1992 | AT 122697 T | 15-06-1995 |
| | | DE 69109773 D1 | 22-06-1995 |
| | | DE 69109773 T2 | 21-09-1995 |
| | | EP 0471988 A2 | 26-02-1992 |
| | | ES 2075275 T3 | 01-10-1995 |
| | | US 5198146 A | 30-03-1993 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 18195417 A
- EP 18195422 A
- EP 18195415 A
- EP 3000792 A1


### In der Beschreibung aufgeführte Nicht-Patentliteratur


- **A. D. MCNAUGHT ; A. WILKINSON.** IUPAC Compendium of Chemical Terminology. Blackwell Scientific Publications, 1997
- **MICHAEL DORNBUSCH ; ULRICH CHRIST ; ROB RASING.** Epoxidharze. Vincentz Network GmbH & Co KG, 2015